# EUROPEAN PATENT SPECIFICATION

(11) **EP 4 108 828 B1**
(45) Date of publication and mention of the grant of the patent: **21.02.2024**
(21) Application number: 22179784.8
(22) Date of filing: 20.06.2022
(51) Int. Cl.: D21F 1/02, D21F 1/48, D21F 3/10, D21G 3/00

(54) **ELONGATED COMPONENT FOR A MANUFACTURING MACHINE OF A FIBROUS CELLULOSIC WEB, ITS USE AND METHOD FOR RECYCLING**
LÄNGLICHES BAUTEIL FÜR EINE MASCHINE ZUR HERSTELLUNG EINER FASERSTOFFBAHN, VERWENDUNG DAVON UND VERFAHREN ZUR WIEDERVERWERTUNG
COMPOSANT ALLONGÉ POUR UNE MACHINE DE FABRICATION D'UNE BANDE DE FIBRES CELLULOSIQUES, SON UTILISATION ET SON PROCÉDÉ DE RECYCLAGE

(30) Priority: 22.06.2021 FI 20215732
(43) Date of publication of application: 28.12.2022
(73) Proprietor: Valmet Technologies Oy, 02150 Espoo (FI)
(72) Inventor: Viitasalo, Pasi, 40700 Jyväskylä (FI); Kaasalainen, Mikko, 40700 Jyväskylä (FI)
(74) Representative: Berggren Oy

(56) References cited:
- EP-B1- 2 875 184
- WO-A1-2007/001221
- US-A1- 2005 279 478

## Description

The present invention relates to an elongated component for a manufacturing machine of a fibrous cellulosic web, its use and to a method for recycling according to the preambles of enclosed independent claims.

Cellulosic fibrous webs, such as paper, board, tissue and the like, are produced in processes, where number of apparatuses are arranged consecutively in a process line. A typical process line comprises at least a headbox, a wire section, a press section, a drying section and a reel-up. The process line can further comprise treatment sections for surface sizing, coating and calendering of the formed fibrous web.

The process line, its sections and apparatuses comprise various elongated planar or profiled components, such as doctor blades, headbox sheets and rod beds. The conventional elongated components are made from various materials, such as plastics, fibre enforced plastic laminates or from plastic containing composite materials. Many of these elongated components are susceptible to wear, and they must be replaced at regular intervals in order to maintain the proper functioning of the process line and the quality of the produced fibrous web. Often the used elongated components are just treated as waste and disregarded. Such elongated planar or profiled components are described for example in EP 2 875 184 B1, WO 2007/001221 A1 and US 2005/279478 A1.

The fees for depositing used or disregarded material to waste disposal sites are generally increasing in an attempt to encourage businesses to find alternative solutions to their waste management. At the same time, there is a general trend in the society to reduce the use of fossil based materials, such as plastics. A specific concern is the formation of microplastics, which easily pollutes aquatic environments, such as rivers, lakes and seas. It is possible that during the use of the elongated components in the manufacture of fibrous webs microplastics are formed and freed into the circulating waters of the process line. There is a risk that they may even escape outside the manufacturing process, e.g. through wastewater treatment process.

In view of the above, there is a need to find new, more sustainable materials for elongated components, which would make them more environmentally friendly and easier to dispose of.

The object of the present invention is to minimize or even eliminate the disadvantages existing in the prior art.

An object of the present invention is to provide elongated planar or profiled components that enable easy and effective recycling or disposal of used components.

A further object of the present invention is to improve sustainability of the manufacturing process of the cellulosic fibrous webs and/or make it more consistent with the values of circular economy.

All the described embodiments and advantages apply for the component, use as well as the method according to the present invention, when applicable, even if not always explicitly stated so.

These objects are achieved by the features disclosed in the independent claims and the invention is defined by the features of the enclosed independent claims. Some preferred embodiments of the present invention are presented in the dependent claims.

A typical elongated planar or profiled component according to the present invention for a manufacturing machine of a fibrous cellulosic web, such as paper, board or tissue web, which elongated component is at least partially formed from a composite material, comprises
- a continuous polymer matrix, and
- reinforcing inorganic fibres embedded in the continuous polymer matrix,
wherein the continuous polymer matrix is biodegradable and the reinforcing inorganic fibres are biodegradable glass fibres.

A typical use of an elongated planar or profiled component according to the present invention is in a manufacture of paper, board, tissue or the like.

A typical method according to the present invention for recycling elongated planar and/or profiled components used for manufacture of a fibrous web, such as paper, board, tissue or the like, comprises
- collecting first elongated planar and/or profiled components according to the present invention which are at least partially formed from a composite material,
- processing the composite material of the first elongated planar and/or profiled components into a starting composite material comprising biodegradable polymer(s) and biodegradable glass fibres,
- forming the starting composite material into second elongated planar and/or profiled components suitable for use in the manufacture of fibrous cellulosic webs and comprising biodegradable glass fibres embedded the biodegradable polymer matrix.

Now it has been surprisingly found that elongated components that are used in manufacturing machines for fibrous cellulosic webs can be at least partially made of composite material comprising a biodegradable continuous matrix and inorganic fibres which are biodegradable glass fibres. It was highly unexpected that the fully-biodegradable composite material is able to withstand the conditions prevailing at the manufacturing machine sufficient long time without excessive deterioration. The use of biodegradable composite for elongated components makes it possible to recycle the used components into new components as long as the mechanical properties are satisfied, and then the components can be sustainably disposed of, e.g. by composting. This significantly decreases the amount of waste that is produced in the manufacturing process itself. Use of biodegradable composite also minimises or reduces the risk for microplastics contamination due to the wear of the elongated components during their use. Even if microparticles of composite material would be liberated due to wear into the circulating process waters, they will be degraded into harmless environmentally acceptable components.

Furthermore, it has been unexpectedly observed that the use of composite material which comprises a biodegradable continuous matrix and reinforcing inorganic fibres selected from biodegradable glass fibres may improve performance of the elongated components. It has been found that the material thickness in the components could be in some cases reduced, while at least maintain or even improving the process performance of the elongated component.

In the present context the term "elongated planar or profiled component" denotes any component used in manufacture of a fibrous cellulosic web, such as paper, board, tissue or the like, which has a length that corresponds the full-width or the part-width of the cellulosic web. The elongated component thus has typically a length of 0.5 - 12 m, more typically 6 - 10 m. Elongated component usually extends over the whole width of the web to be produced, either continuously or discontinuously, equally over the both edges of the web. The elongated component is usually arranged detachably to the manufacturing machine with suitable connection means, e.g. holders, clamps or the like, and most often it can be removed/installed from the tending side of the machine by pulling/pushing or sometimes by lifting, especially if it is connected by bolts or the like. The other dimensions of the elongated component, width and height, are always significantly less than its length.

The elongated component according to the invention may be a planar component or a profiled component. Elongated planar components typically have two parallel large surfaces, and they can be sheet-like or blade-like. For example, the elongated planar component is selected from doctor blades, headbox sheets, headbox wedges, suction roll sealings and suction box covers, which are used in a wet-end section in the manufacture of paper, board or tissue.

The elongated profiled components have typically curved or bent form, or they may have an irregular shape with non-planar and often non-parallel opposite surfaces, and/or they may contain protruding parts. The elongated profiled component may be selected, for example, from rod beds used in surface sizing to hold a rotating rod, rod bed parts, foil blades, dewatering elements, such as foil lists, and holder parts for doctoring equipment.

According to one preferable embodiment the elongated planar component may be a blade, such as a doctor blade, preferably having a blade thickness in a range of 1 - 4 mm, preferably 2 - 3 mm. The elongated planar components according to the present invention are especially suitable for use as doctor blades to clean a roll surface from water and/or impurities. The elongated planar components are also especially suitable for use as pressure blades in a doctoring equipment or edge wiper blades on both edges of the web. It has been noted that the blades made from biodegradable composite, especially comprising polylactic acid, are less prone for blade wear and the blade maintains its sharpness for longer period. At the same time it is possible to reduce the blade thickness compared to conventional ultra-high-molecular-weight polyethylene (UHMW-PE) doctor blades, typically used in the same machine positions.

The elongated component according to the present invention is at least partially, preferably completely, formed from a composite material, which comprises a continuous polymer matrix, and reinforcing inorganic fibres embedded in the continuous polymer matrix. The reinforcing inorganic fibres are inserted into and surrounded by the continuous polymer matrix. According to the present invention the continuous polymer matrix is biodegradable and the reinforcing inorganic fibres are biodegradable glass fibres. In the present context "biodegradable" indicates that continuous polymer matrix and reinforcing fibres are degradable by biological activity, e.g. by microorganisms, such as bacteria, fungi, algae, and/or enzymes. The degradation of the continuous polymer matrix is accompanied by a lowering of the molar mass of the original polymer(s) of the polymer matrix. Preferably at least 90 weight-% of the continuous polymer matrix and reinforcing fibres are degraded into environmentally acceptable constituents, such as water, carbon dioxide and inorganic salts, preferably within 6 months.

The continuous polymer matrix may comprise any suitable biodegradable polymer or mixture of biodegradable polymers. According to one preferable embodiment, the continuous polymer matrix may comprise polylactic acid; polycaprolactone; a polyhydroxyalkanoate, such as polyhydroxybutyrate; poly(alkylene succinate), such as polyethylene succinate) or poly(butylene succinate); or any mixtures thereof. Preferably the continuous polymer matrix comprises at least polylactic acid, which is here understood as a copolymer of lactic acid and lactide. The weight average molecular weight of the polylactic acid may be, for example in a range from 10 000 - 900 000 g/mol, preferably 30 000 - 500 000 g/mol, more preferably from 55 000 - 250 000 g/mol.

The composite material may comprise 50 - 80 weight-%, preferably 60 - 70 weight-%, of continuous polymer matrix.

According to one preferable embodiment the continuous polymer matrix comprises a mixture of polylactic acid and poly(alkylene succinate), preferably poly(butylene succinate). The amount of polylactic acid in the continuous polymer matrix may be 20 - 60 weight-%, preferably 30 - 55 weight-%, more preferably 40 - 50 weight-%. The amount of the poly(alkylene succinate) may be 40 - 80 weight-%, preferably 45 - 70 weight-%, more preferably 50 - 60 weight-%. The percentages are calculated from the total weight of the polymer matrix only, thus excluding the weight of the reinforcing glass fibres. It has been observed that the combination of the polylactic acid and poly(alkylene succinate) is able to provide the combination of desired mechanical properties and biodegradability which is needed for the elongated components in manufacturing machines for fibrous cellulosic webs.

The reinforcing inorganic fibres may be any biodegradable glass fibres having suitable strength and degradation properties. According to one preferable embodiment the inorganic fibres are biodegradable glass fibres comprising
60 - 75 weight-%, preferably 65 - 70 weight-%, of SiO₂;
5 - 20 weight-%, preferably 12 - 17 weight-%, of Na₂O;
5 - 25 weight-%, preferably 8-11 weight-%, of CaO;
0 - 10 weight-%, preferably 3-7 weight-%, of MgO;
0.5 - 5 weight-%, preferably 0.5 - 2.5 weight-%, of P₂O₅;
0 - 15 weight-%, preferably 1 - 4 weight-%, B₂O₃;
0 - 20 weight-%, preferably 0.5 - 4 weight-%, K₂O;
0 - 4 weight-% of SrO; and
0 - 1 weight-% of Li₂O.

According to one embodiment the biodegradable glass fibres may in addition comprise 0 - 5 weight-% of Al₂O₃.

According to another embodiment the biodegradable glass fibres comprise at most 0.3 weight-% of Al₂O₃+Fe₂O₃.

According to one embodiment the composite material may comprise 10 - 40 weight-%, preferably 10 - 30 weight-%, of biodegradable glass fibres.

The inorganic fibres may be chopped biodegradable glass fibres, which have a fibre length 0.5 - 3 mm. The chopped biodegradable glass fibres are preferably randomly and uniformly embedded in the continuous polymer matrix. The fine particle size of the chopped biodegradable glass fibres provides smooth and uniform structure for the elongated component made from the composite material, which is advantageous in terms of non-marking of the fibrous web, machine clothing or roll surface. An elongated component comprising composite with chopped biodegradable glass fibres can be easily prepared by melting granulates of suitable biodegradable polymer(s), mixing the chopped glass fibres with the polymer melt in an extruder and forming the desired elongated components by extrusion.

According to one embodiment the inorganic fibres may be continuous biodegradable glass fibres forming at least one woven structure embedded in the continuous polymer matrix. The elongated component may comprise one or more layers of unidirectional or woven structures of reinforcing fibres embedded in the continuous polymer matrix. The elongated components may be formed by preparing a prepreg comprising the biodegradable matrix polymer and oriented biodegradable glass fibres, followed by pressing the prepreg under the influence of heat and increased pressure whereby the elongated component with desired shape and dimensions is formed of composite material. Pultrusion and press technology are also possible techniques for forming the composite material when continuous glass fibres are used. Other suitable techniques are vacuum injection, resin transfer moulding and sheet moulding compound process.

The composite material may further comprise additional filler particles, preferably mineral filler particles, embedded in the continuous polymer matrix. The composite material my comprise 0 - 30 weight-%, preferably 0.1 - 30 weight-%, of additional filler particles, preferably mineral filler particles. The additional filler particles may be mixed with chopper biodegradable glass fibres before blending into the polymer matrix. The composite material may comprise additional filler particles of one type, or it may comprise a mixture of different additional filler particles. The additional filler particles may preferably be selected from inorganic mineral filler particles, such as particles of silica, silicon carbide, carbon black, titanium oxide, feldspar, kaolin. It is possible that the additional filler particles may comprise organic particles, such as particles of aramid or polyethylene or rubber. In some embodiments the additional filler particles may have an average particle diameter over 5 µm, preferably in the range of 10 - 300 µm. It is also possible to use nanosized additional filler particles, which have an average particle diameter <1 µm, for example 5 - 40 nm. Nanosized additional filler particles can be used alone or together with larger additional filler particles. Use of one or more additional filler particles make it possible to adjust the mechanical properties of the composite material. However, the use of additional filler particles is fully optional.

The composite material may preferably have a heat deflection temperature of ≥85°C, preferably ≥90°C, more preferably ≥95°C, even more preferably ≥100°C, determined according to standard ISO 75 method A.

The composite material may preferably have
- a value for tensile strength at break at least 50 MPa, preferably 60 - 80 MPa, determined according to standard ISO 527; and/or
- a tensile modulus value of at least 7500 MPa, preferably 7800 - 8800 MPa, determined according to standard ISO 527; and/or
- a distortion value ≤0.3 mm/m; and/or
- flexural modulus value of at least 7300 MPa, preferably 7400 - 7600 MPa, determined according to standard ISO 178.

According to one embodiment the invention relates even to an arrangement for a manufacturing machine of a fibrous cellulosic web, such as paper, board or tissue web, which arrangement comprises an elongated planar or profiled component and at least one connection means, such as holder, clamp or the like, for supporting the elongated component in the manufacturing machine, where both the elongated component and the at least one connection means comprise or consist of biodegradable composite, as describe in this context.

According to one embodiment the invention further relates to the use of a composite material comprising a continuous polymer matrix and inorganic reinforcing fibres selected from biodegradable glass fibres embedded in the continuous matrix for elongated planar and/or profiled components used for manufacture of a fibrous web, such as paper, board, tissue or the like.

One of the great advantages of the present invention is that the elongated planar or profiled components formed from composite material comprising biodegradable continuous polymer matrix and inorganic reinforcing fibres selected from biodegradable glass fibres can be easily recycled after their use. After the estimated operational life of the elongated component is run out, the elongated component is detached from the manufacturing machine. The detached elongated components can be collected, and optionally sorted. At the sorting stage possible non-degradable parts may be removed.

The composite parts of the elongated components are processed into a starting composite material, e.g. by melting the continuous polymer matrix of the composite material. The starting composite material thus comprises biodegradable polymer(s) and biodegradable glass fibres, and optional additional filler particles, preferably mineral filler particles. The starting composite material may then be formed into a second elongated component, e.g. by extruding. The obtained second elongated component comprises at least biodegradable glass fibres embedded the biodegradable polymer matrix and is suitable for use in the manufacture of fibrous cellulosic webs.

Preferably the processing of the collected elongated components may comprise washing and comminuting the composite parts of elongated components into composite particles before their processing into the starting composite material.

Typically the collected elongated components have a first set of material and/or mechanical properties, such as average fibre length of the reinforcing fibres. The processing of the collected elongated fibres may change the material and/or mechanical properties, which means that the formed second elongated components have a second set of material and/or mechanical properties. Typically material and/mechanical properties, such as average fibre length of the reinforcing fibres, may be reduced during the processing. This means that the collected first elongated components usually have higher material and/or mechanical properties than the formed second elongated components. According to one preferable embodiment the collected elongated components are doctor blades, which are processed into second elongated components, such as headbox sheets or headbox wedges. The present invention thus provides a possibility to effectively recycle higher grade composite elements into lower grade composite elements. The recycling can be continued as long as the material and mechanical properties of the formed second components fulfil the requirements of the manufacturing process. Finally, the material may be composted in an industrial composter.

The following schematical non-limiting drawings further demonstrate certain aspects of the present invention. The invention may be better understood by reference to the drawings in combination with the detailed description of the embodiments presented herein.
Figure 1 shows schematically a first example of an elongated profiled component for a manufacturing machine of a fibrous cellulosic web according to one embodiment of the present invention.
Figure 2 shows schematically a second example of an elongated profiled component for a manufacturing machine of a fibrous cellulosic web according to one embodiment of the present invention.
Figure 3 shows schematically a third example of an elongated profiled component for a manufacturing machine of a fibrous cellulosic web according to one embodiment of the present invention.
Figure 4 shows schematically a possible life-cycle of an elongated planar or profiled component according to the present invention.

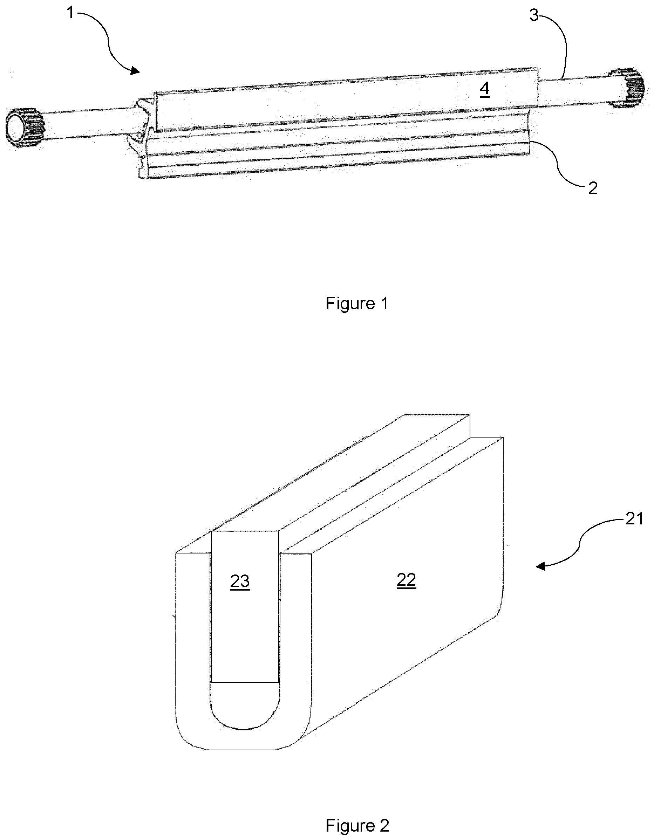

In Figure 1 is seen a rod-bed assembly 1, which comprises a first example of an elongated profiled component, which is a rod-bed 2. The rod-bed assembly 1 further comprises a rod 3 for dosing a coating or sizing medium in a coating or sizing device (not shown). The rod 3 is rotatably supported by the rod-bed 2. The rod-bed 2 comprises an elongated profiled body 4 with a recess adapted to receive the rotatable rod 3. The elongated profiled body 4 of the rod bed is formed from a biodegradable composite material comprising a continuous polymer matrix, and reinforcing glass fibres embedded in the continuous polymer matrix, wherein both the polymer matrix and the reinforcing fibres are biodegradable.

In Figure 2 is seen a sealing arrangement 21 for a suction roll (not shown). The sealing arrangement comprises a seal holder 22 and a sealing element 23 arranged in the seal holder 22. Both the seal holder 22 and the sealing element 23 extend essentially over the length of the suction box. The second example of an elongated planar component according to the present invention is the sealing element (23), which is formed from a biodegradable composite material comprising a continuous polymer matrix, and reinforcing glass fibres embedded in the continuous polymer matrix, wherein both the polymer matrix and the reinforcing fibres are biodegradable.

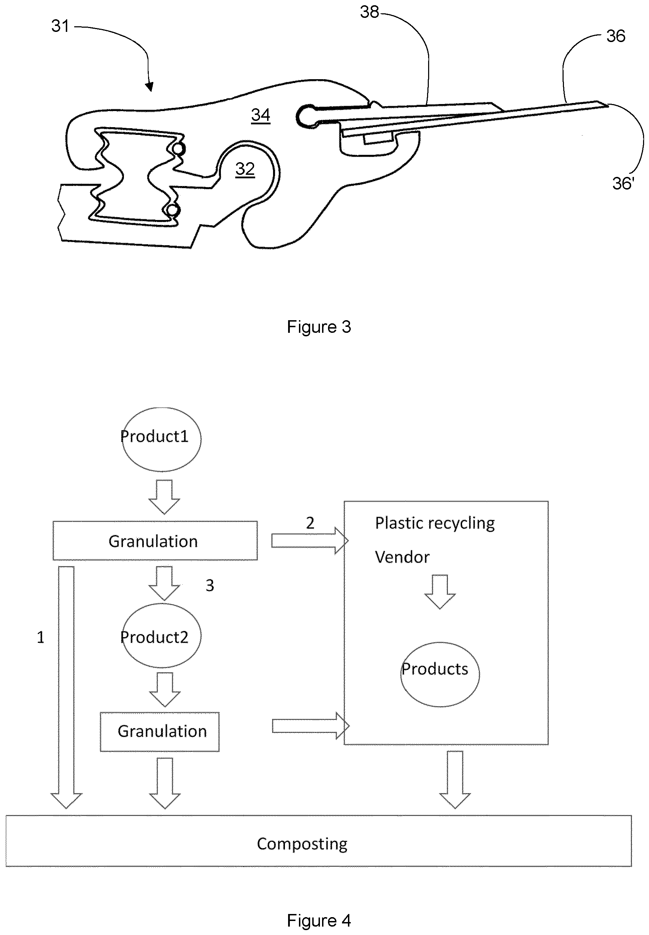

In Figure 3 is seen a doctor arrangement 31 suitable for use in a manufacture of a fibrous cellulosic webs, such as paper, board, tissue or the like. The doctor arrangement 31 comprises a frame component 32 to which a blade holder 34 is connected. A doctor blade 36 and a pressure plate 38 are arranged to the blade holder 34. The doctor blade 36 provides the third example of an elongated planar component according to the present invention. The doctor blade is formed from a biodegradable composite material comprising a continuous polymer matrix, and reinforcing glass fibres embedded in the continuous polymer matrix, wherein both the polymer matrix and the reinforcing fibres are biodegradable. The tip 36' of the doctor blade 36 made from biodegradable composite material is less prone for wear and the blade maintains its sharpness for longer period. It is also possible to form the blade holder 34, pressure plate 38 and/or the frame component 32 from a biodegradable composite material in accordance with the present invention. In this manner the amount of biodegradable material can be significantly increased in the manufacturing process of paper, board, tissue or the like.

Figure 4 shows schematically a possible life-cycle of an elongated planar or profiled component according to the present invention, named as "Product1". After its working life has come into an end Product1 is granulated or comminuted. After granulation, the obtained granules can be disposed by composting (arrow 1). Alternatively obtained granules can be taken care of by a plastic recycling vendor, who can use the granules for manufacture of new products (arrow 2). After their use, these new products can also be disposed by composting. According to a further alternative, the granules from Product1 can be used for production of new elongated planar or profiled component, here denoted "Product2" (arrow 3). Typically the Product2 has lower material requirements as Product1. After the working life of Product2 ends, it can be granulated or comminuted and preferably disposed by composting.

### EXPERIMENTAL

Some embodiments of the invention are described in the following non-limiting experiments.

Blade samples according to the invention were compared with blades made of materials typically used in prior art doctor blades. Blade samples of 5 different material compositions A- E were made as follows.
Sample A (Comparative example): UHMW-PE - unreinforced, a piece of a commercial doctor blade;
Sample B: 70 weight-% of biodegradable resin (matrix), reinforced with 30 weight-% of chopped biodegradable glass fibres;
Sample C (Comparative example): 70 weight-% of biodegradable resin (matrix) and 30 weight-% of mineral filler;
Sample D (Comparative example): epoxy resin matrix, reinforced by non-biodegradable E-glass fibre, a piece of a commercial doctor blade
Sample E: 60 weight-% of biodegradable resin (matrix), reinforced with 10 weight-% of chopped biodegradable glass fibres and 30 weight-% of mineral filler particles.

The length and width of each blade sample A to E was identical, 75 mm X 20 mm, with blade stick-out of 40 mm simulating true operation of a doctor blade while in its holder. Tip of the blades was bevelled to provide maximum sharpness and cleaning effect.

### Experiment 1

Test equipment comprised of a PU-covered test roll of Shore hardness 10.6 P&J. The roll was rotated with a speed of 1000 m/min. Samples A - D were tested simultaneously by holding each sample by its holder in a contact against the roll surface with a blade angle 25° and line pressure 180 N/m. Water lubrication on the roll surface was provided by a water shower. The roll was rotated for 2 weeks after which the samples were removed. The blades were visually inspected of their wear and of keeping the tip sharpness/bevel shape. Also, the surface of the roll was visually inspected for any damage or if traces or residuals of the blade material was left on the surface. Results are shown in Table 1 below.

### Experiment 2

In Experiment 2 Sample B according to the invention and the comparative Sample C were tested for their applicability for recycling as a raw material for manufacturing of new products. The samples B and C were compared for maintaining their mechanical properties after exposure to wet conditions for several weeks. The Shore D hardness, ISO 178 flexural strength and flexural modulus of samples were measured before and after immersing in 40 °C water for 4 weeks. Results are shown in Table 1 below.

**Table Results of Experiments 1 and 2**

| Sample | Blade thickness [mm] | Blade wear | Blade sharpness | Roll surface quality, residuals | Shore D Hardness | Flexural strength [MPa] | Flexural Modulus [MPa] |
|---|---|---|---|---|---|---|---|
| | | | | | before/after | before/after | before/after |
| A (Ref.) | 5 | major | major loss | some | - | - | - |
| B | 4 | none/minor | kept | no | 74 / 72 | 131 / 72 | 7520 / 5340 |
| C (Ref.) | 4 | none/minor | kept | no | 77 / 73 | 99 / 65 | 6130 / 4560 |
| D (Ref.) | 2 | none/minor | kept | no | - | - | - |

### Experiment 3

Samples and test arrangement were the same as in Experiment 1. The focus was in optimising blade thickness further in order to minimise the material usage. The comparative samples A and D had a thickness that is typically used in commercial blades made of that material, but the blade thickness of samples B, C and E was varied. Doctoring performance was monitored by inspecting the ability of the sample to keep the roll surface dry of the water as blade wear and warp both result in failure to keep the roll surface dry. Blade warp or bend was visually compared to that of the non-biodegradable glass fibre blade (comparative sample D). Blade wear and roll surface quality were inspected as in Experiment 1. Results are shown in Table 2.

**Table 2 Results of Experiment 3.**

| Sample | Blade thickness [mm] | Doctoring failed after / days | Blade wear | Blade warp | Roll surface quality, residuals |
|---|---|---|---|---|---|
| A (Ref.) | 5 | 3 | major | - | some |
| B | 3 | >14 | none/minor | no | no |
| B | 2 | >14 | none/minor | no | no |
| C (Ref.) | 3 | 6 | non-acceptable | yes | some |
| C (Ref.) | 2 | 3 | non-acceptable | yes | some |
| D (Ref.) | 2 | >14 | none/minor | no | no (but roll surface fine-grooved) |
| E | 3 | >14 | none/minor | no | no |
| E | 2 | 12 | none/minor | yes | no |

It can be seen from results in Table 2 blades according to invention have competitive properties compared with the conventional blades of prior art. Sufficient stiffness properties were achieved with optimised thickness. A low thickness was desired not only in order to reduce the amount of material and thus the amount of waste but also for improved doctoring performance. The thin blade according to the invention is less prone to lose its bevelled tip and thus less prone to hydroplaning or floating. It keeps a good contact with the surface to be doctored and still without damaging the roll surface or leaving rubbed residuals on the surface during contact.

Despite of its biodegradable nature the composite material used in the blades of the invention maintains certain mechanical properties that are important in terms of recycling as a raw material. Especially surface hardness is maintained after exposure to water and wet conditions. Strength properties are decreased but not too much for not being applicable to a second round as raw material, especially for a component with less demanding requirements. For material used in Samples B and C it has been found that drop in mechanical properties is remarkable only after the second or third melting. Comparative Sample C with mineral filler but without biodegradable glass fibre reinforcement performed acceptable with blade thickness of 4 mm (Table 1) but when the blade thickness was reduced to 3 or 2 mm, it failed (Table 2). Inventive Samples B (with biodegradable glass fibre, without mineral filler) and E (with mineral filler and biodegradable glass fibres in proportion of 3:1) achieved good performance level even with blade thickness of 2 mm, as seen from Table 2. Thus, it was concluded that presence of biodegradable glass fibres is advantageous in doctor blades. Samples B and E according to the invention even seemed to exceed the prior art Sample D in terms of maintaining roll surface quality during doctoring.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Elongated planar or profiled component (2,23,36) for a manufacturing machine of a fibrous cellulosic web, such as paper, board or tissue web, which elongated component is at least partially formed from a composite material comprising
- a continuous polymer matrix, and
- reinforcing inorganic fibres embedded in the continuous polymer matrix, **characterised in that** the continuous polymer matrix is biodegradable and the reinforcing inorganic fibres are biodegradable glass fibres.

2. Elongated component according to claim 1, **characterised in that** continuous polymer matrix comprises polylactic acid; polycaprolactone; a polyhydroxyalkanoate, such as polyhydroxybutyrate; poly(alkylene succinate), such as poly(butylene succinate); or any mixtures thereof.

3. Elongated component according to claim 1 or 2, **characterised in that** the inorganic fibres are biodegradable glass fibres comprising
60 - 75 weight-%, preferably 65 - 70 weight-%, of SiO₂;
5 - 20 weight-%, preferably 12 - 17 weight-%, of Na₂O;
5 - 25 weight-%, preferably 8-11 weight-%, of CaO;
0 - 10 weight-%, preferably 3-7 weight-%, of MgO;
0.5 - 5 weight-%, preferably 0.5 - 2.5 weight-%, of P₂O₅;
0 - 15 weight-%, preferably 1 - 4 weight-%, of B₂O₃;
0 - 20 weight-%, preferably 0.5 - 4 weight-%, of K₂O;
0 - 4 weight-% of SrO; and
0 - 1 weight-% of Li₂O.

4. Elongated component according to claim 1, 2 or 3, **characterised in that** the composite material further comprises mineral filler particles, embedded in the continuous polymer matrix.

5. Elongated component according to any of claims 1 - 4, **characterised in that** the composite material comprises
- 50 - 80 weight-%, preferably 60 - 70 weight-% of polymer matrix;
- 10 - 50 weight-%, preferably 10 - 30 weight-% of inorganic fibres, and
- optionally 0 - 30 weight-%, preferably 0.1-30 weight-% of mineral filler particles.

6. Elongated component according to any of preceding claims 1 - 5, **characterised in that** the elongated planar component is selected from doctor blades, headbox sheets, headbox wedges, suction roll sealings and suction box covers, which are used in a wet-end section in the manufacture of paper, board or tissue.

7. Elongated component according to claim 6, **characterised in that** the elongated planar component is a doctor blade having a blade thickness in a range of 1 - 4 mm, preferably 2 - 3 mm.

8. Elongated component according to any of preceding claims 1 - 5, **characterised in that** the elongated profiled component is selected from rod beds, rod bed parts, foil blades, dewatering elements, such as foil lists, and holder parts for doctoring equipment.

9. Elongated component according to any of preceding claims 1 - 8, **characterised in that** the inorganic fibres are chopped biodegradable glass fibres, which have a fibre length 0.5 - 3 mm, wherein the biodegradable glass fibres are preferably randomly and uniformly embedded in the continuous polymer matrix.

10. Elongated component according to any of preceding claims 1 - 8, **characterised in that** the inorganic fibres are continuous biodegradable glass fibres forming at least one woven structure embedded in the continuous polymer matrix.

11. Elongated component according to any of preceding claims 1 - 10, **characterised in that** the composite material has
- a heat deflection temperature of ≥85°C, preferably ≥90°C, more preferably ≥95°C, even more preferably ≥100°C, determined according to standard ISO 75 method A; and/or
- a value for tensile strength at break at least 50 MPa, preferably 60 - 80 MPa, determined according to standard ISO 527; and/or
- a tensile modulus value of at least 7500 MPa, preferably 7800 - 8800 MPa, determined according to standard ISO 527; and/or
- a distortion value ≤0.3 mm/m; and/or
- flexural modulus value of at least 7300 MPa, preferably 7400 - 7600 MPa, determined according to standard ISO 178.

12. Use of an elongated planar or profiled component according to any of claims 1 - 11 in a manufacture of paper, board, tissue or the like.

13. Method for recycling elongated planar and/or profiled components used for manufacture of a fibrous web, such as paper, board, tissue or the like, the method comprising
- collecting first elongated planar and/or profiled components according to any of claims 1 - 11 which are at least partially formed from a composite material,
- processing the composite material of the first elongated planar and/or profiled components into a starting composite material comprising biodegradable polymer(s) and biodegradable glass fibres,
- forming the starting composite material into second elongated planar and/or profiled components suitable for use in the manufacture of fibrous cellulosic webs and comprising biodegradable glass fibres embedded the biodegradable polymer matrix.

14. Method according to claim 13, **characterised in that** the processing comprises washing and comminuting the composite parts of elongated planar and/or profiled components into composite particles for the starting composite material.

15. Method according to claim 13 or 14, **characterised in that** the first elongated planar and/or profiled components have a first set of mechanical properties, and the second elongated planar and/or profiled components have a second set of mechanical properties, wherein the said first components have higher mechanical properties than the said second components.

## Patentansprüche

1. Längliches ebenes oder profiliertes Bauteil (2, 23, 36) für eine Maschine zur Fertigung einer faserigen Zellulosebahn, wie beispielsweise einer Papier-, Karton- oder Papiertuchbahn, wobei das längliche Bauteil zumindest teilweise aus einem Verbundwerkstoff geformt ist, der Folgendes umfasst:
- eine durchgehende Polymermatrix und
- anorganische Verstärkungsfasern, die in der durchgehenden Polymermatrix eingebettet sind,
**dadurch gekennzeichnet, dass** die durchgehende Polymermatrix biologisch abbaubar ist und die anorganischen Verstärkungsfasern biologisch abbaubare Glasfasern sind.

2. Längliches Bauteil nach Anspruch 1, **dadurch gekennzeichnet, dass** die durchgehende Polymermatrix Polymilchsäure, Polycaprolacton, ein Polyhydroxyalkanoat, wie beispielsweise Polyhydroxybutyrat, Poly(alkylensuccinat), wie beispielsweise Poly(butylensuccinat), oder beliebige Gemische derselben umfasst.

3. Längliches Bauteil nach Anspruch 1 oder 2, **dadurch gekennzeichnet, dass** die anorganischen Fasern biologisch abbaubare Glasfasern sind, die Folgendes umfassen:
60 bis 75 Gew.-%, vorzugsweise 65 bis 70 Gew.-%, an SiO₂,
5 bis 20 Gew.-%, vorzugsweise 12 bis 17 Gew.-%, an Na₂O,
5 bis 25 Gew.-%, vorzugsweise 8 bis 11 Gew.-%, an CaO,
0 bis 10 Gew.-%, vorzugsweise 3 bis 7 Gew.-%, an MgO,
0,5 bis 5 Gew.-%, vorzugsweise 0,5 bis 2,5 Gew.-%, an P₂O₅,
0 bis 15 Gew.-%, vorzugsweise 1 bis 4 Gew.-%, an B₂O₃,
0 bis 20 Gew.-%, vorzugsweise 0,5 bis 4 Gew.-%, an K₂O,
0 bis 4 Gew.-% an SrO und
0 bis 1 Gew.-% an Li₂O.

4. Längliches Bauteil nach Anspruch 1, 2 oder 3, **dadurch gekennzeichnet, dass** der Verbundwerkstoff ferner mineralische Füllstoffteilchen umfasst, die in der durchgehenden Polymermatrix eingebettet sind.

5. Längliches Bauteil nach einem der Ansprüche 1 bis 4, **dadurch gekennzeichnet, dass** der Verbundwerkstoff Folgendes umfasst:
- 50 bis 80 Gew.-%, vorzugsweise 60 bis 70 Gew.-%, an Polymermatrix,
- 10 bis 50 Gew.-%, vorzugsweise 10 bis 30 Gew.-%, an anorganischen Fasern und
- wahlweise 0 bis 30 Gew.-%, vorzugsweise 0,1 bis 30 Gew.-%, an mineralischen Füllstoffteilchen.

6. Längliches Bauteil nach einem der Ansprüche 1 bis 5, **dadurch gekennzeichnet, dass** das längliche ebene Bauteil ausgewählt ist aus Abstreichmessern, Stoffauflaufkasten-Platten, Stoffauflaufkasten-Keilen, Saugwalzen-Abdichtungen und Saugwalzen-Abdeckungen, die in einer Nasspartie bei der Fertigung von Papier, Karton oder Papiertuch verwendet werden.

7. Längliches Bauteil nach Anspruch 6, **dadurch gekennzeichnet, dass** das längliche ebene Bauteil ein Abstreichmesser ist, das eine Klingendicke in einem Bereich von 1 bis 4 mm, vorzugsweise 2 bis 3 mm, aufweist.

8. Längliches Bauteil nach einem der Ansprüche 1 bis 5, **dadurch gekennzeichnet, dass** das längliche profilierte Bauteil ausgewählt ist aus Stangenbetten, Stangenbett-Teilen, Folienklingen, Entwässerungselementen, wie beispielsweise Folienleisten, und Halterungsteilen für Abstreichausrüstung.

9. Längliches Bauteil nach einem der Ansprüche 1 bis 8, **dadurch gekennzeichnet, dass** die anorganischen Fasern zerkleinerte biologisch abbaubare Glasfasern sind, die eine Faserlänge von 0,5 bis 3 mm aufweisen, wobei die biologisch abbaubaren Glasfasern vorzugsweise zufällig und gleichförmig in der durchgehenden Polymermatrix eingebettet sind.

10. Längliches Bauteil nach einem der Ansprüche 1 bis 8, **dadurch gekennzeichnet, dass** die anorganischen Fasern durchgehende biologisch abbaubare Glasfasern sind, die mindestens eine gewebte Struktur bilden, die in der durchgehenden Polymermatrix eingebettet ist.

11. Längliches Bauteil nach einem der Ansprüche 1 bis 10, **dadurch gekennzeichnet, dass** der Verbundwerkstoff Folgendes aufweist:
- eine Wärmeformbeständigkeitstemperatur von ≥ 85 °C, vorzugsweise ≥ 90 °C, bevorzugter ≥ 95 °C, noch bevorzugter ≥ 100 °C, bestimmt gemäß dem Standard ISO 75, Methode A, und/oder
- einen Wert für die Zugfestigkeit bei Bruch von mindestens 50 MPa, vorzugsweise 60 bis 80 MPa, bestimmt gemäß dem Standard ISO 527, und/oder
- einen Zugmodulwert von mindestens 7500 MPa, vorzugsweise 7800 bis 8800 MPa, bestimmt gemäß dem Standard ISO 527, und/oder
- einen Verformungswert ≤ 0,3 mm/m und/oder
- einen Biegemodulwert von mindestens 7300 MPa, vorzugsweise 7400 bis 7600 MPa, bestimmt gemäß dem Standard ISO 178.

12. Verwendung eines länglichen ebenen oder profilierten Bauteils nach einem der Ansprüche 1 bis 11 bei einer Fertigung von Papier, Karton, Papiertuch oder dergleichen.

13. Verfahren zur Wiederaufbereitung von länglichen ebenen und/oder profilierten Bauteilen, die zur Fertigung einer faserigen Bahn, wie beispielsweise Papier, Karton, Papiertuch oder dergleichen, verwendet werden, wobei das Verfahren Folgendes umfasst:
- Sammeln von ersten länglichen ebenen und/oder profilierten Bauteilen nach einem der Ansprüche 1 bis 11, die zumindest teilweise aus einem Verbundwerkstoff geformt sind,
- Verarbeiten des Verbundwerkstoffs der ersten länglichen ebenen und/oder profilierten Bauteile zu einem Ausgangsverbundwerkstoff, der biologisch abbaubare(s) Polymer(e) und biologisch abbaubare Glasfasern umfasst,
- Formen des Ausgangsverbundwerkstoffs zu zweiten länglichen ebenen und/oder profilierten Bauteilen, die zur Verwendung bei der Fertigung von faserigen Zellulosebahnen geeignet sind und biologisch abbaubare Glasfasern umfassen, die in der biologisch abbaubaren Polymermatrix eingebettet sind.

14. Verfahren nach Anspruch 13, **dadurch gekennzeichnet, dass** das Verarbeiten das Waschen und das Zerkleinern der Verbundwerkstoffteile von länglichen ebenen und/oder profilierten Bauteilen zu Verbundwerkstoffteilchen für den Ausgangsverbundwerkstoff umfasst.

15. Verfahren nach Anspruch 13 oder 14, **dadurch gekennzeichnet, dass** die ersten länglichen ebenen und/oder profilierten Bauteile einen ersten Satz von mechanischen Eigenschaften aufweisen und die zweiten länglichen ebenen und/oder profilierten Bauteile einen zweiten Satz von mechanischen Eigenschaften aufweisen, wobei die ersten Bauteile höhere mechanische Eigenschaften aufweisen als die zweiten Bauteile.

## Revendications

1. Composant planaire ou profilé allongé (2, 23, 36) pour machine de fabrication d'une bande cellulosique fibreuse, comme du papier, du carton ou de l'essuie-tout, lequel composant allongé est au moins partiellement formé d'un matériau composite comprenant
- une matrice de polymère continue, et
- des fibres organiques de renfort noyées dans la matrice de polymère continue,
**caractérisé en ce que** la matrice de polymère continue est biodégradable et que les fibres inorganiques de renfort sont des fibres de verre biodégradables.

2. Composant allongé selon la revendication 1, **caractérisé en ce que** la matrice en polymère continu comprend de l'acide polylactique ; du polycaprolactone ; un polyhydroxyalcanoate, comme du polyhydroxybutyrate, du poly(alkylène succinate), comme du poly(butylène succinate) ; ou tous leurs mélanges.

3. Composant allongé selon la revendication 1 ou 2, **caractérisé en ce que** les fibres inorganiques sont des fibres de verre biodégradables comprenant
60 à 75 % en poids, de préférence 65 à 70 % en poids de SiO₂ ;
5 à 20 % en poids, de préférence 12 à 17 % en poids de Na₂O ;
5 à 25 % en poids, de préférence 8 à 11 % en poids de CaO,
0 à 10 % en poids, de préférence 3 à 7 % en poids de MgO,
0,5 à 5 % en poids, de préférence 0,5 à 2,5 % en poids de P₂O₅ ;
0 à 15 % en poids, de préférence 1 à 4 % en poids de B₂O₃ ;
0 à 20 % en poids, de préférence 0,5 à 4 % en poids de K₂O ;
0 à 4 % en poids de SrO, et
0 à 1 % en poids de Li₂O.

4. Composant allongé selon la revendication 1, 2 ou 3, **caractérisé en ce que** le matériau composite comprend en outre des particules de charge minérales noyées dans la matrice de polymère continue.

5. Composant allongé selon l'une quelconque des revendications 1 à 4, **caractérisé en ce que** matériau composite comprend
- 50 à 80 % en poids, de préférence 60 à 70 % en poids de matrice de polymère ;
- 10 à 50 % en poids, de préférence 10 à 30 % en poids de fibres inorganiques, et
- en option 0 à 30 % en poids, de préférence 0,1 à 30 % en poids de particules de charge minérales.

6. Composant allongé selon l'une quelconque des revendications précédentes 1 à 5, **caractérisé en ce que** le composant planaire allongé est sélectionné parmi des lames docteur, des feuilles de caisse de tête, des coins de caisse de tête, des joints à rouleaux d'aspiration et des capots de boîte d'aspiration, qui sont utilisés dans une section humide dans la fabrication de papier, de carton ou d'essuie-tout.

7. Composant allongé selon la revendication 6, **caractérisé en ce que** le composant planaire allongé est une lame docteur ayant une épaisseur de lame de l'ordre de 1 à 4 mm, de préférence 2 à 3 mm.

8. Composant allongé selon l'une quelconque des revendications précédentes 1 à 5, **caractérisé en ce que** le composant planaire allongé est sélectionné parmi des supports de tige, des éléments de supports de tige, des lames de type feuille, des éléments de déshumidification, comme des listes de feuilles, et des pièces supports pour de l'équipement docteur.

9. Composant allongé selon l'une quelconque des revendications précédentes 1 à 8, **caractérisé en ce que** les fibres inorganiques sont des fibres de verre biodégradables hachées qui ont une longueur de fibres de 0,5 à 3 mm, les fibres de verre biodégradables étant de préférence noyées de manière aléatoire et uniformément dans la matrice de polymère continue.

10. Composant allongé selon l'une quelconque des revendications précédentes 1 à 8, **caractérisé en ce que** les fibres inorganiques sont des fibres de verre biodégradables formant au moins une structure tissée noyée dans la matrice en polymère continue.

11. Composant allongé selon l'une quelconque des revendications précédentes 1 à 10, **caractérisé en ce que** le matériau composite a
- une température de déflexion thermique ≥ 85 °C, de préférence ≥ 90 °C, plus préférentiellement ≥ 95 °C, encore plus préférentiellement ≥ 100 °C, déterminée suivant la norme ISO 75 méthode A ;
et/ou
- une valeur de résistance à la traction à la rupture d'au moins 50 MPa, de préférence 60 à 80 MPa, déterminée suivant la norme ISO 527 ; et/ou
- une valeur de module de traction d'au moins 7500 MPa, de préférence 7800 à 8800 MPa, déterminée suivant la norme ISO 527 ; et/ou
- une valeur de distorsion ≥ 0,3 mm/m, et/ou
- une valeur de module de flexion d'au moins 7300 MPa, de préférence 7400 à 7600 MPa, déterminée suivant la norme ISO 178.

12. Utilisation d'un composant planaire ou profilé allongé selon l'une quelconque des revendications 1 à 11 dans la fabrication de papier, carton, essuie-tout ou similaire.

13. Procédé de recyclage de composants planaires et/ou profilés allongés utilisés pour la fabrication d'une bande fibreuse, comme du papier, du carton, de l'essuie-tout ou similaire, ce procédé comprenant
- la collecte de premiers composants planaires et/ou profilés allongés selon l'une quelconque des revendications 1 à 11 qui sont au moins partiellement formés d'un matériau composite,
- le traitement du matériau composite des premiers composants planaires et/ou profilés allongés pour former un matériau composite de départ comprenant du ou des polymères biodégradables et des fibres de verre biodégradables,
- le formage du matériau composite de départ en seconds composants planaires et/ou profilés allongés aptes à une utilisation dans la fabrication de bandes cellulosiques fibreuses et comprenant des fibres de verre biodégradables noyées dans la matrice de polymère biodégradable.

14. Procédé selon la revendication 13, **caractérisé en ce que** le traitement comprend le lavage et le broyage d'une pièce composite de composants planaires et/ou profilés allongés en particules composites pour le matériau composite de départ.

15. Procédé selon la revendication 13 ou 14, **caractérisé en ce que** les premiers composants planaires et/ou profilés allongés ont un premier ensemble de propriétés mécaniques, et que les seconds composants planaires et/ou profilés allongés un enregistrer ont un second ensemble de propriétés mécaniques, lesdits premiers composants ayant des propriétés mécaniques supérieures à celles desdits seconds composants.
